(19) **Europäisches Patentamt**

**European Patent Office**

**Office européen des brevets**

(11) **EP 0 697 570 B1**

(12) **EUROPEAN PATENT SPECIFICATION**

(45) Date of publication and mention
of the grant of the patent:
**29.11.2000 Bulletin 2000/48**

(51) Int Cl.⁷: **F24F 11/00**, G05D 23/19

(21) Application number: **95303321.4**

(22) Date of filing: **17.05.1995**

(54) **Air conditioner**

Klimaanlage

Installation de conditionnement d'air

(84) Designated Contracting States:
**DE FR GB IT**

(30) Priority: **19.08.1994 JP 19578194**

(43) Date of publication of application:
**21.02.1996 Bulletin 1996/08**

(73) Proprietor: **SANYO ELECTRIC CO., LTD.**
**Moriguchi-shi, Osaka (JP)**

(72) Inventors:
• **Ishihara, Manabu**
**Isesaki-shi, Gunma-ken (JP)**
• **Rakuma, Tsuyoshi**
**Oura-gun, Gunma-ken (JP)**
• **Kanai, Hiroshi**
**Ohsato-gun, Saitama-ken (JP)**
• **Fudo, Takashi**
**Oura-gun, Gunma-ken (JP)**
• **Watanabe, Masato**
**Oura-gun, Gunma-ken (JP)**

(74) Representative: **Read, Matthew Charles et al**
**Venner Shipley & Co.**
**20 Little Britain**
**London EC1A 7DH (GB)**

(56) References cited:
EP-A- 0 001 377         FR-A- 2 676 367
US-A- 4 889 280         US-A- 5 145 112

**Description**

The present invention relates to an air conditioner comprising variable heating and/or variable cooling means for heating or cooling a room, a temperature sensor for detecting the air temperature of the room, and control means responsive to the output of the temperature sensor for changing the heating power or cooling power so as to control the air temperature of the room to approach a target value. Such an air conditioner is known from US-A-4889280.

A known air conditioner has a pair of heat exchangers, one located outdoors and the other indoors, a compressor for compressing a refrigerant, a four-way valve for changing the direction in which the refrigerant flows, a capillary tube, and so on. The known air conditioner performs various air conditioning functions, including heating, cooling, and dehumidifying, by changing the start of the four-way valve. Such an air conditioner is provided with a temperature sensor for detecting the temperature of a room and generally operates to bring the room temperature to agree with a preset target temperature.

Recently, a so-called "inverter-type" air conditioner has also become popular. In this type of air conditioner, the operating frequency of the compressor is made changeable by an inverter such that the operating frequency, hence the operating capacity, of the compressor is changed according to the change in the air conditioning load and, as a result, the room temperature is accurately controlled.

However, a known characteristic of human perception is that when a person is placed in constant environmental conditions (constant air temperature, humidly, air flow, etc.) for a long time, he or she becomes used to the environment and, as a result, the person, even if he or she felt comfortable initially, gradually comes to feel less comfortable. Consequently, even after the room temperature has reached the level of the preset target temperature through the operation of the air condition of the air conditioner, a person who has stayed in the room over a certain period and, hence, become used to the environmental conditions, may change the target temperature so as to feel more comfortable. As a result, energy has often been wastefully consumed.

An aim of the present invention is to provide a controlled heating or cooling apparatus for a room which assist in ensuring the long term comfort of an occupant of the room.

An apparatus according to the present invention is characterised in that target value is modulated after a predetermined time period such that the air temperature of the room approaches a new target value at the expiration of every successive predetermined time period.

It is an aim of a preferred feature of the present invention that the energy consumption by heating or cooling apparatus be reduced.

Preferably, an apparatus according to the present invention includes means for setting a desired temperature and the control means sets the target value on the basis of an input desired temperature such that the average power required for the modulated heating or cooling the room is less than that which would be required for unmodulated heating or cooling of the room to the input desired temperature.

More preferably, the control means is responsive to a change in input desired temperature to heat or cool the room initially toward the desired temperature and thereafter towards the target value when the room temperature has been in a predetermined range including said desired temperature for a predetermined time.

Advantageously, the modulation has a 1/f power spectrum.

In a preferred embodiment, the present invention is applied to an air conditioner including a refrigeration circuit. The air conditioner may include a heat exchange for the room and a fan for blowing air past the heat exchanger under the control of the control means and the control means be operable to modulate the air flow rate produced by the fan. Preferably, the modulation of the air flow rate has a 1/f power spectrum.

While an air conditioner according to the invention can be any of an air conditioner equipped with both cooling and heating functions, an air conditioner equipped with only cooling function, and an air conditioner equipped with only heating function the mean of the target temperature is set to be below the input desired temperature. Similarly, if the air conditioner only cools, the mean of the target temperature is set above the input desired temperature.

With the target temperature set in the described manner, the room temperature varies up and down periodically in accordance with a predetermined rule and the average value of the room temperature takes on a value shifted in such a direction that the load of the air conditioning means is thereby lightened from that for attaining the desired temperature before modulation.

Since the room temperature periodically varies up and down in the described manner, the person in the room hardly feels that the environmental conditions inside the room are constant and, hence, his or her feeling of comfort is prevented from becoming gradually lessened by his or her becoming used to the environmental conditions.

Therefore, it hardly occurs that the person in the room, from a desire to feel more comfortable, for example, changes the desired temperature so as to increase the load on the air conditioning means and, hence, consumed energy can be prevented from increasing. Thus, energy consumption can be saved without impairing the feeling of comfort.

The temperature modulation starts when the period of time during which the room temperature is within a predetermined temperature range from the desired temperature is about to exceed a predetermined period of time.

Through such practice, the human sense, in the period before the room temperature becomes stabilized around the target temperature, is not yet used to the environmental conditions in the room, and hence a feeling of comfort can be provided by bringing the room temperature to the vicinity of the desired temperature. But when the room temperature has been within a predetermined temperature range from the desired temperature over a predetermined period of time, i.e., when the room temperature has become stabilized around the desired temperature, the control means starts to modulate the temperature about the target temperature which is set such that the air conditioning load on the air conditioning means is lightened from that for attaining the desired temperature. Accordingly, a person in the room is prevented from becoming used to the environmental conditions in the room so that his or her feeling of comfort is not lessened but is maintained.

Therefore, fine room temperature control maintaining the feeling of comfort according to changes in the sense of the person in the room can be realized.

After a predetermined period of time has elapsed since the room temperature reached the desired temperature or substantially reached the desired temperature through the air conditioning operation made by an air conditioning means, the modulation is performed in accordance with 1/f fluctuation and shifts the average value of the room temperature in such a direction that the air conditioning load on the air conditioning means is thereby lightened from that for attaining the target temperature before the correction.

Incidentally, the 1/f fluctuation is for example related with the number of human pulses and it is said to provide special feeling of comfort to human beings.

Since the room temperature periodically varies up and down in accordance with the 1/f fluctuation, the person in the room hardly feels that the environmental conditions in the room are constant and, hence, the feeling of comfort is prevented from becoming gradually lessened but the person in the room can be given special feeling of comfort.

Therefore, it becomes unnecessary for the person in the room, from a desire to have more feeling of comfort, for example, to change the target temperature to the side increasing the load of the air conditioning means from that for attaining the originally set target temperature (to lower the temperature from the originally set temperature in the cooling or to raise the temperature from the originally set temperature in the heating) to invite an increase in consumed energy. Thus, energy consumption can be saved without impairing the feeling of comfort.

An embodiment of the present invention will now be, described by way of example, with reference to the accompanying drawings, in which:

Figure 1 is a refrigerant circuit diagram of an air conditioner according to the present invention;
Figure 2 is an electric circuit diagram of the indoor unit of the air conditioner of Figure 1;
Figure 3 is an electric circuit diagram of the outdoor unit of the air conditioner of Figure 1;
Figure 4 is a flowchart showing a control routine;
Figure 5 is a flowchart showing a subroutine for heating control;
Figure 6 is a flowchart showing a subroutine for cooling control;
Figure 7 is a chart showing variations of the room temperature; and
Figure 8 is a chart showing variations of a constant used for calculating the target temperature providing temperature fluctuations.

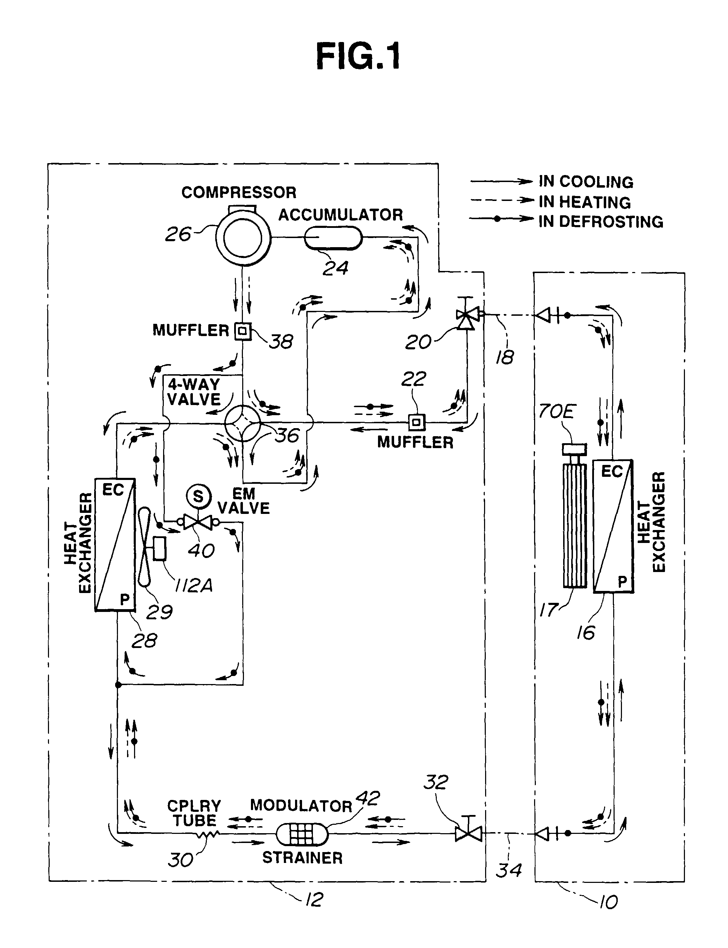

An air conditioner according to the present invention has, as shown in Figure 1, an indoor unit 10 and an outdoor unit 12 and, further, has a refrigerant circulating path for circulating the refrigerant through the indoor unit 10 and the outdoor unit 12.

The indoor unit 10 is provided with an indoor heat exchanger 16. In the vicinity of the indoor heat exchanger 16, there is provided a fan 17 driven by a fan motor 70E, described later. The fan 17 creates a draft through the indoor heat exchanger 16.

The indoor heat exchanger 16 is connected to a valve 20 of the outdoor unit 12 by a refrigerant pipe 18 formed of thick pipe. The valve 20 is connected to a four-way valve 36 via a muffler 22. One port of the four-way valve 36 is connected to one port of the outdoor heat exchanger 28 and another port of the four-way valve 36 is joined to another port of the outdoor heat exchanger 28 via an accumulator 24, a compressor 26, a muffler 38, and the four-way valve 36.

The outdoor heat exchanger 28 is joined to a valve 32 through a capillary tube 30 and a strainer 42 and also joined to a junction point between the muffler 38 and the four-way valve 36 through an electromagnetic valve 40. By having the valve 32 connected with the indoor heat exchanger 16 by a refrigerant pipe 34 formed of a thin pipe, a closed refrigerant circulating path is formed.

In the vicinity of the outdoor heat exchanger 28, there is provided a fan 29 driven by a fan motor 112A. The fan 29 creates a draft through the outdoor heat exchanger 28.

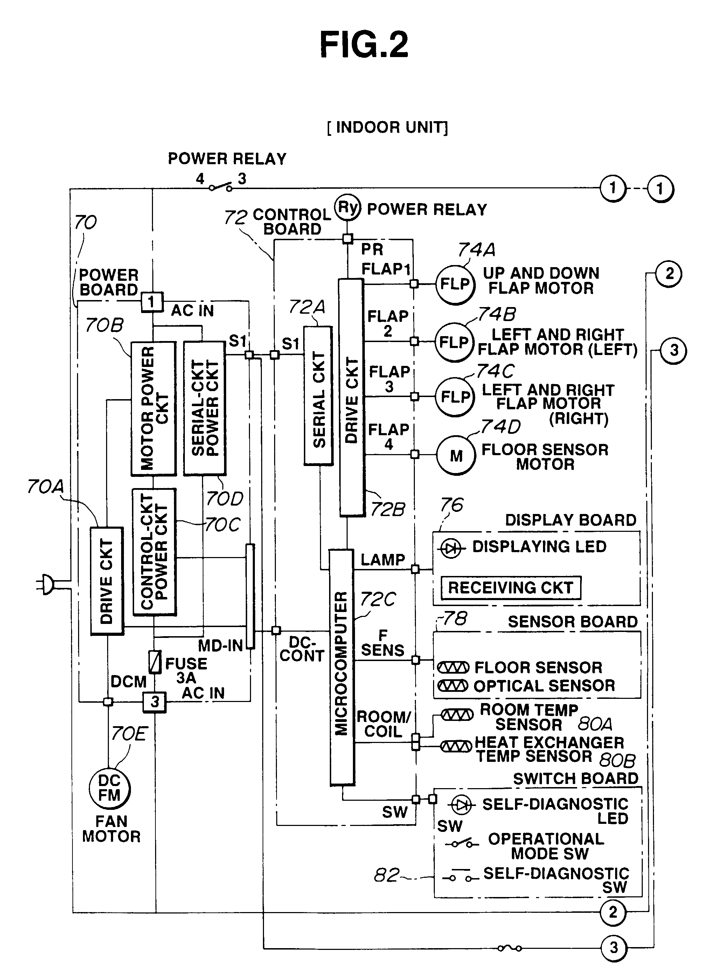

Figure 2 is a diagram showing the electric circuit of the indoor unit 10. The electric circuit has a power board 70 and a control board 72. On the power board 70, there are provided a drive circuit 70A, to which a fan motor 70E (DC brushless motor) for controlling the draft sent into the room is connected, a motor power circuit 70B for generating power for driving the motor, a control-circuit power circuit 70C for generating power for a control circuit, and a serial-circuit 70D for generating power for serial circuits.

Accordingly, the number of revolutions of the fan motor 70E, and hence the air flow rate produced by the fan apparatus, can be controlled at will by changing the DC voltage, supplied to the drive circuit 70A from the motor power circuit 70B, by means of a microcomputer. In this embodiment, the voltage is controlled to have, for example, 256 steps within the range 12 V to 36 V.

On the control board 72. there are provided a serial circuit 72A connected to the serial-circuit power circuit 70D, a drive circuit 72B for driving the motor, and a microcomputer 72C as a control circuit. The drive circuit 72B is connected to a stepper motor 74A for moving an up and down flap, stepper motors 74B and 74C for moving left and right flaps, and a floor-sensor stepper motor 74D for changing the direction of a floor sensor for detecting the temperature at the floor surface. The angular positions of the rotors of these stepper motors are controlled by signals supplied from the microcomputer 72C.

The microcomputer 72C is connected with a display LED, for indicating the operational mode and the like, and a receiving circuit for receiving control signals from a remote controller, provided on a display board 76 and also connected with the floor sensor and an optical sensor provided on a sensor board 78. The microcomputer 72C is further connected to a room temperature sensor 80A and a heat exchanger temperature sensor 80B for detecting the temperature of the indoor heat exchanger 16 and, further, it is connected to a self-diagnostic LED, an operation changeover switch for switching the operational mode between normal operation and test operation, and a self-diagnostic switch provided on a switch board 82.

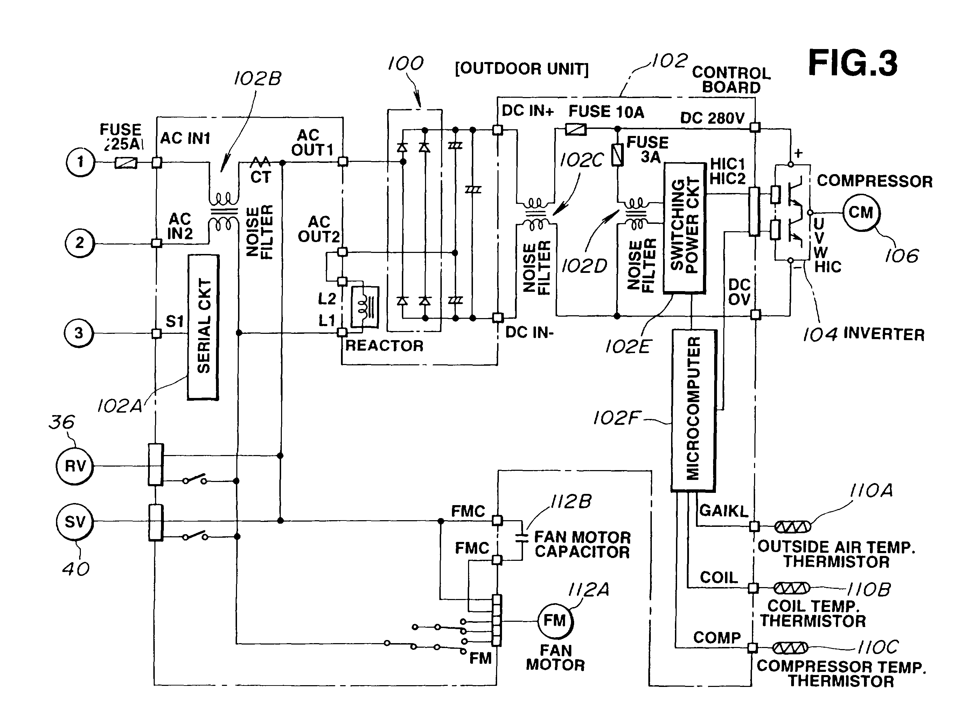

Figure 3 is a diagram showing an electric circuit of the outdoor unit 12. The electric circuit has a rectifying circuit 100 and a control board 102. The electric circuit of the outdoor unit 12 is connected to the electric circuit of the indoor unit 10 of Figure 2 by a plurality of terminals indicated by 1 ~ 3.

On the control board 102, there are provided a serial circuit 102A connected to the serial-circuit power circuit 70D of the indoor unit 10, noise filters 102B, 102C, and 102D for eliminating noise, a switching power circuit 102E for generating switching control signals for switching an inverter 104, and a microcomputer 102F functioning as the control circuit. The microcomputer 102F controls the frequency (18 Hz - 150 Hz) of the AC power supplied to the compressor and the operation of the various units in accordance with control signals transmitted from the microcomputer 72C of the indoor unit 10 via the serial circuit 72A in the indoor unit 10 and the serial circuit 102A.

The switching power circuit 102E is connected to the inverter 104 and the inverter 104 is connected to a compressor 106 for compressing the refrigerant.

The microcomputer 102F is connected to an outside air temperature thermistor 110A for detecting the outside air temperature, a coil temperature thermistor 110B for detecting the temperature of the outdoor heat exchanger 28, and a compressor temperature thermistor 110C for detecting the temperature of the compressor. To the outdoor unit 12 are connected the four-way valve 36 and the electromagnetic valve 40. Reference numeral 112A denotes a fan motor and 112B denotes a fan-motor capacitor.

In this air conditioner, when the four-way valve 36 is switched, with the electromagnetic valve 40 turned off (closed), so that the refrigerant circulates through the indoor heat exchanger 16, refrigerant pipe 18, valve 20, muffler 22, four-way valve 36, accumulator 24, compressor 26, muffler 38, four-way valve 36, outdoor heat exchanger 28, capillary tube 30, strainer 42, valve 32, refrigerant pipe 34, and the indoor heat exchanger 16 in the order named, the refrigerant is evaporated in the indoor heat exchanger 16 and the refrigerant is condensed in the outdoor heat exchanger 28 and, hence, cooling of the space inside the room can be achieved. When the refrigerant is circulated in the direction opposite to the above, the refrigerant is condensed in the indoor heat exchanger 16 and the refrigerant is evaporated in the outdoor heat exchanger 28 and, hence, heating of the space inside the room can be achieved.

Further, by opening the electromagnet valve 40 during the heating operation so that a portion of the refrigerant at high temperature, discharged from the compressor 26, flows into the outdoor heat exchanger 28, the temperature of the outdoor heat exchanger 28 is raised and the formation of frost therein is countered.

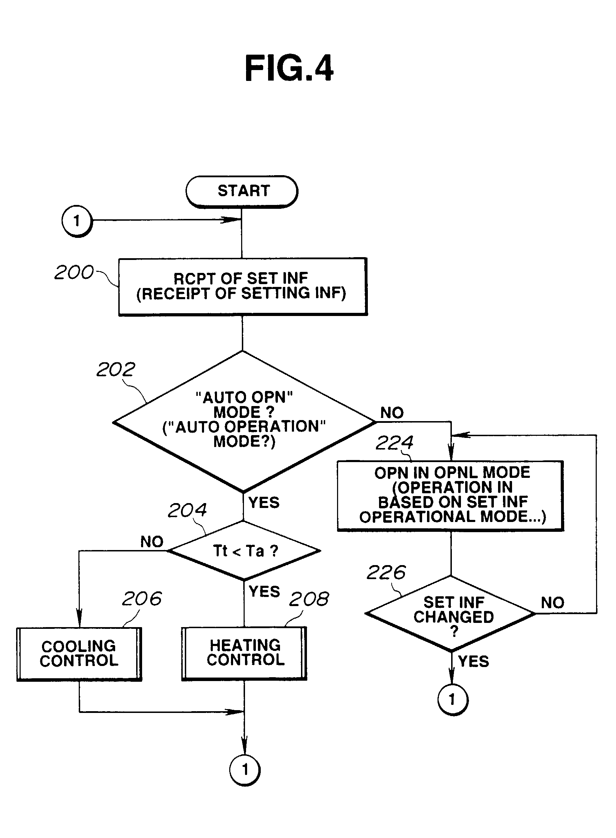

Referring now to Figures 4 to 8, an air-conditioning control routine, executed by the microcomputer 72C in the indoor unit of the present embodiment, will be described.

The control routine shown in the flowchart of Figure 4 starts when a remote controller, not shown, or a switch, not shown, provided in the air conditioner has issued instructions to start operation.

In step 200, pieces of setting information such as the operational mode, target temperature, direction of the fan, desired air flow rate for the fan, and so on are received. A ROM, not shown. incorporated in the microcomputer 72C, is preprogrammed with default setting information, and when some item of setting information has not been changed by means of the remote controller or the like, the default setting information for that item is used.

In following step 202, it is determined whether the operational mode indicated by the setting information is automatic operation. When the result of the determination is positive, step 204 follows, and when it is negative, namely, when the indicated operational mode is another mode such as the cooling, heating, or drying mode, step 224 follows.

In step 224, the appropriate operation is performed in accordance with the setting information. Since details of such operations are well known in the art and are not directly relevant to the present invention, description of them will be omitted. The operation in step 224 is continued unless it is decided in the following step 226 that the setting information has been changed by the remote controller or the like during the operation. When the result of the determination in step 226 is positive, the steps of procedure from above step 200 are executed again.

On the other hand, when the operational mode setting is that for automatic operation and, hence, the determination in step 202 is positive, then, in step 204, the target temperature Ta received in step 200 is compared with the room temperature Tt.

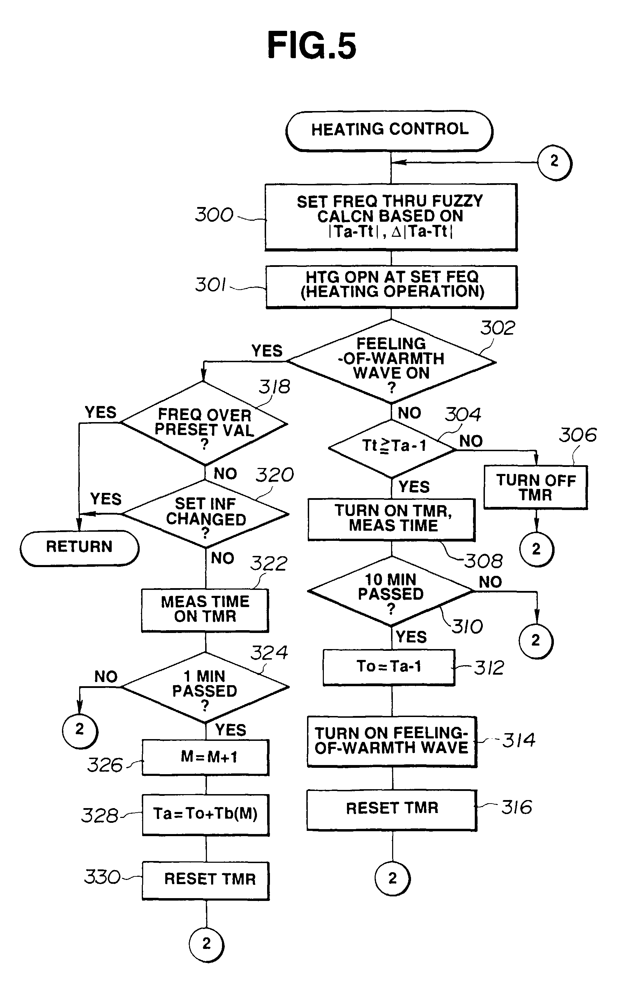

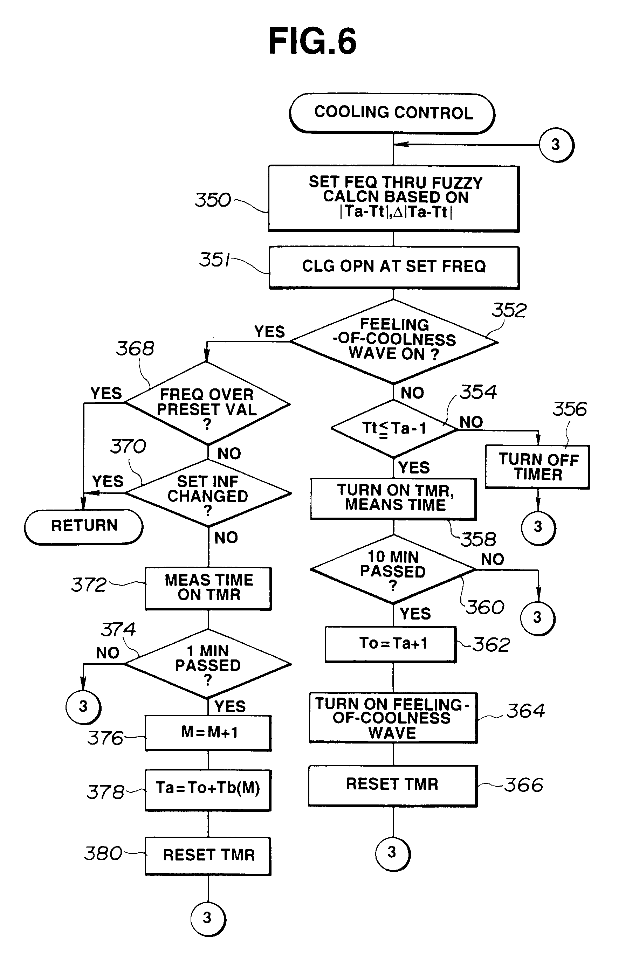

When the target temperature Ta is higher than the room temperature Tt, namely, when the person in the room desires to heat the room, then, the determination in step 204 is positive and step 208 follows and therein the subroutine for heating control shown in Figure 5 is executed. However, when the target temperature Ta is lower than the room temperature Tt, namely, when the person in the room desires to cool the room, then, the determination in step 204 is negative and step 206 follows and therein the subroutine for cooling control shown in Figure 6 is executed.

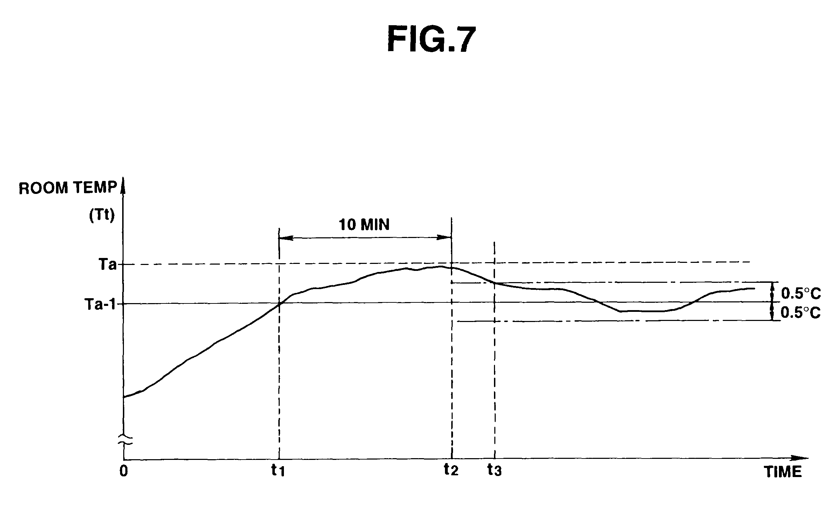

Now, the subroutine for heating control shown in Figure 5 will be described using a graph shown in Figure 7. which shows an example of changes in the room temperature during heating control operation.

In step 300, the operating frequency of the compressor is set through fuzzy calculation based on $|Ta - Tt|$ and $\Delta|Ta - Tt|$ (variation from a preceding value of $|Ta - Tt|$). The setting of the frequency made here will be described below.

The microcomputer 72C of the indoor unit 10 makes fuzzy calculation based on the temperature difference between the target temperature and the room temperature and the variation of the temperature difference and thereby obtains the variation of the operating capacity (frequency) of the compressor 26 and, then, transmit the variation of the operating capacity to the microcomputer 102F in the outdoor unit 12 over the interface circuit and signal line. The microcomputer 102F in the outdoor unit 12, in turn, supplies the compressor 26 with AC power at a new frequency obtained by adding the above variation of the frequency to the frequency of the AC power which is currently supplied to the compressor 26.

By increasing or decreasing the frequency of the AC power supplied to the compressor 26 on the basis of the target temperature and room temperature, the operating capacity (frequency of AC power) of the compressor 26 necessary for attaining the target temperature can be obtained and the operation of the compressor 26 is maintained at the operating capacity. When the target temperature has been changed under the above operating conditions, the variation of the operating capacity of the compressor 26 is calculated anew by the microcomputer 72C and, thus, the operating capacity (frequency) necessary for attaining the target temperature (air conditioning load) is set.

Then, in step 301, a heating operation is performed at the frequency set as described above. Through the heating operation, the room temperature rises during the period from time 0 to time t1 shown in Figure 7.

In following step 302, it is determined whether a flag is turned on indicating that a feeling-of-warmth wave, i.e., control to periodically change the room temperature by correcting the target temperature to rise and fall periodically in the temperature control according to the invention, is executed.

When the determination in step 302 is positive, step 318 follows, but when it is negative, step 304 follows.

Since the flag is not turned on at first, step 304 follows, and therein it is determined whether the room temperature Tt has become equal to or higher than the target temperature Ta - 1 °C.

Since the room temperature Tt, immediately after the start of the feeling-of-warmth wave (time 0 $\sim$ time t1 in Figure 7), does not become equal to or higher than the target temperature Ta - 1 °C, the determination in 304 is negative. Then, step 306 follows and therein a timer, not shown, controlled by the microcomputer 72C is turned off. Incidentally, the timer is off in the default state. Then the flow of procedure returns to step 300 and the steps of procedure are executed again from this step.

On the other hand, when the point of time t1 in Figure 7 has been reached or exceeded and the room temperature Tt has become equal to or higher than the target temperature Ta - 1 °C, the result of the determination in step 304 is positive and step 308 follows. In step 308, the timer is on (started) and time measurement is made. If the timer has already been turned on, the timer is not reset but only the time measurement is made.

In following step 310, it is determined whether the timer has counted 10 minutes or more as the result of the time measurement in step 308.

Since the room temperature Tt between the point of time t1 and t2 in Figure 7 is higher than the target temperature Ta - 1 °C, the result of the determination in step 304 is positive and step 308 follows. However since 10 minutes has not yet elapsed since the timer was turned on in step 308, the result of the determination in step 310 is negative. Hence, the program flow returns to step 300 and the steps of the procedure are executed again from this step.

When time t2 has been reached, the timer count exceeds 10 minutes. Therefore, the result of the determination in step 310 is positive and step 312 follows, and therein Ta - 1 °C is set as the target temperature for the first time $T_0$.

In following step 314, information of the operating condition indicating the fact that the feeling-of-warmth wave, which will be described later in detail, is started, namely the feeling-of-warmth wave is turned on, is set. In following step 316, a timer for measuring the time elapsed after the start of the feeling-of-warmth wave is reset and, then, the program flow returns to step 300 and the steps of procedure are executed again from this step.

After steps 300 and 301 have been executed again, a positive determination is made, i.e., it is decided that the feeling-of-warmth wave is turned on, in step 302, and step 318 follows.

In step 318, it is determined whether the operating frequency of the compressor is over a predetermined frequency and in following step 320, it is determined whether the setting information has been changed by the remote controller or the like. If the result of the determination in any of steps 318 and 320 is positive the subroutine is terminated and the program flow returns to the main routine.

When the result of determination in each of step 318 and step 320 is negative, step 322 follows and the time on the timer is obtained. In following step 324, it is determined whether the timer has counted more than one minute as the result of the time measurement in step 322.

At first, the time elapsed after the timer has been started in step 316, i.e., the time elapsed after the feeling-of-warmth wave has been started in step 314, is measured in step 322 and it is determined in step 324 whether the time elapsed is over one minute.

When one minute has not elapsed, a negative determination is made in step 324 and the program flow returns to step 300 and the steps of the procedure are executed again from this step.

When one minute has elapsed, positive result of the determination is obtained and step 326 follows. In step 326, a variable M for calculating the fluctuation amount, described later, is increased in increments of 1.

The variable M is initialized at first to the initial value 0 and it is increased in increments of 1 in this step and, when the value becomes 121, the value is set to 1 by an interrupt routine, not shown. Accordingly, the variable M, of which the initial value is 0, repeatedly takes up integers $1 \sim 120$.

In following step 328, a new target temperature Ta is set in accordance with the following expressions (1) and (2).

$$Ta = T0 + Tb(M) \qquad (1)$$

$$Tb(M) = 0.5 \times K_M \qquad (2)$$

The temperature $T_0$ in expression (1) is the above described target temperature $T_0$ set for the first time, i.e., the temperature lower by 1 °C than the target temperature Ta set at the beginning.

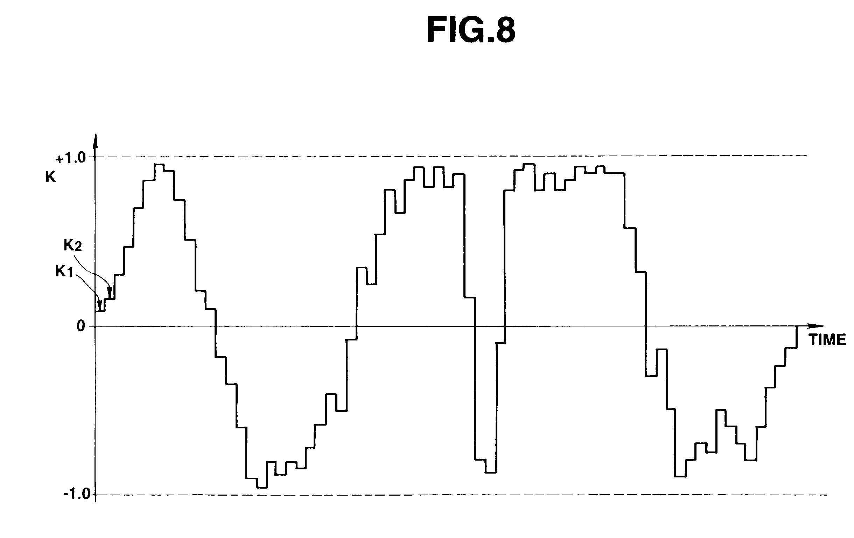

Further, $K_M$ in expression (2) represents a previously stored variable K and the value of the variable K is set so as to vary within the range between the maximum value + 1.0 and the minimum value -1.0 at intervals of one minute as shown in Figure 8.

At first, the value of K1 shown in Figure 8 is read and a new target temperature Ta is set.

Then, in following step 330, the timer is reset to measure the time elapsed after the setting of the new target temperature Ta.

Then, the flow of procedure returns to step 300 and steps of procedure are executed again from this step.

For the second time and forward after the setting of the feeling-of-warmth wave, a positive determination will be made in step 302 and a negative determination made in each of steps 318 and 320, except for the case where the setting information is changed during the operation by the remote controller or the like or the case where the operating frequency of the compressor exceeds the predetermined value (namely, when the load on the air conditioner is increased), and steps 322 and 324 will be repeatedly executed until one minute elapses after the timer being reset in step 330 as described above.

When one minute has elapsed, a positive determination is made in step 324 and, in the following steps 326 and 328, the value of the variable K for the one minute period following that for which the variable K was read on the previous occasion, i.e., the value of K2 in Figure 8, is read and, then, a new target temperature Ta is set based on this value according to the above expressions (1) and (2). In the following step 330, the timer is reset again.

By repeatedly executing steps 300, 302, 318, 320, 322, 324, 326, 328, and 330 as described above, room temperature control with the temperatures 0.5 °C above and below the temperature, lower by 1 °C than the target temperature Ta at the beginning, taken as the upper and lower limits of the maximum width of fluctuation, as apparent from expressions (1) and (2), i.e., the feeling-of-warmth wave, is executed.

Thus, the room temperature varies with the temperatures 0.5 °C above and below the temperature, which is 1 °C lower than the target temperature Ta at the beginning, taken as the upper and lower limits of the maximum width of fluctuation as shown in Figure 7. The reason why the temperature 1 °C lower than the target temperature Ta is taken as the centre of the varying width is because it is known from experimental data that the feeling of comfort of human being is kept, even when the average room temperature is 1 ° C lower than the desired temperature (target temperature), virtually unchanged from the feeling of comfort obtained at the desired temperature (target temperature) by giving fluctuations to the temperature.

The heating control routine is forcedly terminated when instructions to stop the operation are issued by a remote control not shown, or a switch, not shown, provided in the air conditioner.

Now, a cooling control subroutine shown in Figure 6 will be described.

In step 350, the same as in above step 300, the operating frequency of the compressor is set through fuzzy calculation based on ¦Ta - Tt¦ and Δ¦Ta - Tt¦ (variation from a preceding ¦Ta - Tt¦).

In following step 351, a cooling operation is performed at the frequency set in step 350.

In following step 352, it is determined whether a flag is set indicating that a feeling-of-coolness wave, i.e., the control executed in the cooling control, corresponding to the above described feeling-of-warmth wave in the heating control (the control to change the room temperature periodically by correcting the target temperature to rise and fall periodically), is executed.

When the result of the determination in step 352 is positive, step 368 follows, and when it is negative step 354 follows.

Since the flag is not turned on at first, step 354 follows, and therein it is determined whether the room temperature Tt has become equal to or lower than the target temperature Ta + 1 °C.

When the result of the determination in step 354 is negative, step 356 follows and the timer is turned off. Then, the program flow returns to step 350 and the steps of the procedure are executed again from this step.

When the result of the determination in step 354 is positive, step 358 follows. In step 358, the timer is turned on (started) and a time measurement is made. If the timer has already been turned on, the timer is not reset but only the time measurement made.

In the following step 360, it is determined whether the timer has counted more than 10 minutes from the result of the time measurement in step 358.

When the result of the determination in step 360 is negative, the program flow returns to step 350 and the steps of the procedure are executed again from this step.

When the result of the determination in step 360 is positive, step 362 follows and therein Ta + 1 °C is set as the target temperature for the first time $T_0$. In following step 364, information about the operating condition that the feeling-of-coolness wave, which will be described later in detail, is started, namely the feeling-of-coolness wave is turned on, is set. In the following step 366, the timer for measuring the time elapsed after the start of the feeling-of-coolness wave is reset and, then, the program flow returns to step 350 and the steps of the procedure are executed again from this step.

After steps 350 and 351 have been executed again, a positive determination will be made in step 352, i.e., it will decided therein that the feeling-of-coolness wave is turned on, and, then, step 368 follows.

In step 368, it is determined, as in step 318, whether the operating frequency of the compressor exceeds a predetermined frequency, and in the following step 370, it is determined, as in step 320, whether the setting information has been changed by means of the remote controller or the like. If the result of the determination in any of steps 368 and 370 is positive, the subroutine is terminated and returns to the main routine.

When the determination in each of step 368 and step 370 is negative, step 372 follows and the time is measured using the timer. In the following step 374, it is determined whether the timer has counted more than one minute as the result of the time measurement using the timer in step 372.

When one minute has not elapsed, a negative determination is made in step 374 and, then, the program flow returns to step 350 and the steps of the procedure are executed again from this step.

When one minute has elapsed, a positive determination is made in step 374, and, then, steps 376, 378, and 380, similar to steps 326, 328, and 330 in the above described heating control, are executed. Namely, in step 376, the variable M for calculating the fluctuation amount is increased in increments of 1, and in the following step 378, a new target temperature Ta is set in accordance with the following expressions (3) and (4).

$$Ta = T_0 + Tb(M) \qquad (3)$$

$$Tb(M) = 0.5 \times K_M \qquad (4)$$

The temperature $T_0$ in expression (3) is the above described target temperature $T_0$ set for the first time, i.e., the temperature higher than the target temperature Ta set at the beginning by 1 °C.

In following step 380, the timer is reset to measure the time elapsed after the setting of the new target temperature Ta and, then, the program flow returns to step 350 and the steps of the procedure are executed again from this step.

For the second time and forward after the setting of the feeling-of-coolness wave, a positive determination will be made in step 352 and a negative determination made in each of steps 368 and 370, except for the case where the setting information has been changed during the operation by the remote controller or the like or the case where the operating frequency of the compressor exceeds the predetermined value (namely, when the load on the air conditioner is increased), and steps 372 and 374 will be repeatedly executed until one minute has elapsed after the timer was reset in step 380 as described above.

When a "one minute elapsed" positive determination is made in step 374 and, in the following steps 376 and 378, the value of the variable K for the one minute following that for which the variable was read on the previous occasion, i.e., the value of K2 in Figure 8, is read and, then, a new target temperature Ta is set based on this value according to the above expressions (3) and (4). In the following step 380, the timer is reset again.

By repeatedly executing steps 350, 352, 368, 370, 372, 374, 376, 378, and 380 as described above, room temperature control with temperatures 0.5 °C above and below the temperature, higher by 1 °C than the target temperature Ta at the beginning, taken as the upper and lower limits of the maximum width of fluctuation, as apparent from expressions (3) and (4) mentioned above, i.e., feeling-of-coolness wave, is executed.

Thus, the room temperature varies with the temperatures 0.5 °C above and below the temperature, which is 1 °C higher than the target temperature Ta at the beginning, taken as the upper and lower limits of the maximum width of fluctuation.

The cooling control routine is forcedly terminated when instructions to stop the operation are issued by the remote controller, not shown, or a switch, not shown, provided on the air conditioner.

According to the embodiment, as apparent from the above description, a feeling of comfort can be provided by bringing the room temperature to the vicinity of a desired temperature (target temperature) until the room temperature is stabilized around the target temperature, i.e., the human sense becomes used to the environment. Further, even after the room temperature has been stabilized around the target temperature, i.e., the human sense has become used to the environment and the feeling of comfort has begun to lessen, the environment can be changed and the feeling of comfort can be maintained by varying the room temperature. In this case, fine control of the room temperature can be executed for maintaining the feeling of comfort according to changes in the human sense.

Further, since the target temperature is shifted to the side at which the load of the air conditioner is lightened in both cases of heating control and cooling control, the load on the air conditioner can be reduced as compared with that in the conventional practice in which the room temperature was controlled to become equal to the target temperature set at the beginning. Hence, energy saving can be achieved. According to the results of experiments, the practice of setting values in the present embodiment provides an energy saving effect of approximately 7%.

Although, in the embodiment, it is adapted such that the constant K whose value varies with the passage of time as shown in Figure 8 is stored in memory at the beginning and the stored data is read in the course of time, temperature control data may be obtained by calculating, in the course of time, temperature fluctuation data taking on 1/f power spectrum on the basis of the following chaos calculating expression (5). The fluctuation taking on 1/f power spectrum, the so-called 1/f fluctuation, is said to represent the changes in the human pulse, as an example, and to provide special feeling of comfort for a human being. Therefore, if the temperature fluctuation is realized by such means, a special feeling of comfort can be obtained.

$$X_{n+1} = (X_n + X_n^{1.5}) \text{ MOD } 1 \qquad (5)$$

(Initial value: $X_0 = 0.2$)

Further, in addition to the practice of varying the room temperature (providing it with fluctuations) as in the above embodiment, if the air flow rate produced by the fan is also controlled to exhibit variations (fluctuations) the same as in the temperature variations in the embodiment or to exhibit the 1/f fluctuations as described above, a more special feeling of comfort can be provided.

Although the example of air conditioner equipped with both cooling function and heating function has been described in the above embodiment, the invention can be applied to the air conditioner whether it is that equipped with only cooling function or that equipped with only heating function.

According to the invention, as described above in detail, the target temperature is corrected to rise and fall periodically in accordance with a predetermined rule and, further, the average of the target temperature after making the correction takes on a value shifted to the side at which the air conditioning load of the air conditioning means becomes lower than when the target temperature has not been corrected. Therefore, the room temperature varies up and down periodically according to the predetermined rule and the average of the room temperature takes on a value shifted in such a direction that the air conditioning load of the air condoning means is thereby lightened from that for attaining the target temperature before the correction.

Accordingly, an excellent effect can be obtained that energy consumption can be reduced without impairing the feeling of comfort of a person occupying the space being heated or cooled.

In the early stage of operation before the room temperature is stabilized around the target temperature, the human sense is not yet used to the indoor environment, and, hence, the feeling of comfort can be provided by bringing the room temperature to the vicinity of the desired temperature (target temperature). Further, after the room temperature has been at a value within a predetermined temperature range from the target temperature over a predetermined length of time, i.e., after the room temperature has been stabilized around the target temperature, the target temperature changing means causes the average value of the target temperature to shift in such a direction that the air conditioning load of the air conditioning means is thereby lightened from that for attaining the target temperature before the correction, and the air conditioning operation is performed to bring the room temperature to this room temperature, so that the sense of a person in the room is prevented from becoming used to the indoor environment and his or her feeling of comfort is prevented from lessening. Thus, the feeling of comfort of the person in the room can be maintained.

Accordingly, an excellent effect is obtained that fine room temperature control can be executed to maintain the feeling of comfort corresponding to the change in the sense of the person in the room.

Further, according to the invention, the room temperature is corrected to rise and fall in accordance with the 1/f fluctuation and, further, the average value of the target temperature after the correction takes on a value shifted in such a direction that the air conditioning load of the air conditioning means is thereby lightened from that for attaining the target temperature before the correction. Hence, also the room temperature periodically varies up and down in accordance with the 1/f fluctuation and the average value of the room temperature takes on a value shifted in such a direction that the air conditioning load of the air conditioning means is thereby lightened from that for attaining the target temperature before the correction.

Therefore, an excellent effect is obtained that energy consumption can be reduced without lessening the feeling of comfort.

Especially in this case, since the room temperature varies up and down in accordance with the 1/f fluctuation, such an excellent effect can also be provided that special feeling of comfort is given to the person in the room.

## Claims

1.  An air conditioner comprising variable heating and/or variable cooling means (10,12) for heating or cooling a room, a temperature sensor (80A) for detecting the air temperature of the room, control means (72C) responsive to the output of the temperature sensor for changing the heating power or cooling power so as to control the air temperature of the room to approach a target value, **characterised in that** the target value is modulated after a predetermined time period, such that the air temperature of the room approaches a new target value at the expiration of every successive predetermined time period.

2.  An apparatus according to claim 1 including means for setting a desired temperature, wherein the control means sets the target value on the basis of an input desired temperature such that the average power required for the modulated heating or cooling the room is less than that which would be required for unmodulated heating or cooling of the room to the input desired temperature.

3.  An apparatus according to claim 2 wherein the control means is responsive to a change in input desired temperature to heat or cool the room initially toward the desired temperature and thereafter towards the target value when the room temperature has been in a predetermined range including said desired temperature for a predetermined time.

4.  An apparatus according to claim 1, 2 or 3 wherein said modulation has a 1/f power spectrum.

5.  An air conditioner according to any preceding claim including a refrigeration circuit (10,12).

6.  An air conditioner according to claim 5 including an indoor heat exchanger (16) and a fan (17) for blowing air past the indoor heat exchanger under the control of the control means, wherein the control means is operable to modulate the air flow rate produced by the fan.

7.  An air conditioner according to claim 6 wherein the modulation of the air flow rate has a 1/f power spectrum.

8.  An air conditioner according to claim 6 or 7 wherein the target temperature is modulated so as to shift an average value of the new target temperature in a direction in which the air conditioning load of the air conditioner is reduced relative to the load necessary to reach an unmodulated target value.

9.  An air conditioner according to claim 8 wherein the new target temperature is set in accordance with a 1/f fluctuation.

## Patentansprüche

1.  Klimagerät, umfassend variable Heiz- und/oder variable Kühlmittel (10, 12) zum Heizen oder Kühlen eines Raumes, einen Temperatursensor (80A) zum Erfassen der Lufttemperatur des Raumes, Steuermittel (72C), die auf den Ausgang des Temperatursensors ansprechen, um die Heizleistung oder Kühlleistung zu ändern, so daß die Lufttemperatur des Raumes reguliert wird, um sich einem Zielwert anzunähern, dadurch gekennzeichnet, daß der Zielwert nach einer im voraus festgelegten Zeitperiode moduliert wird, so daß sich die Lufttemperatur des Raumes nach dem Verstreichen jeder aufeinanderfolgenden, im voraus festgelegten Zeitperiode einem neuen Zielwert nähert.

2.  Vorrichtung nach Anspruch 1, umfassend Mittel zum Einstellen einer Wunschtemperatur, wobei das Steuermittel den Zielwert auf der Basis einer eingegebenen Wunschtemperatur steuert, so daß die durchschnittliche Leistung, die für das modulierte Heizen oder Kühlen des Raumes erforderlich ist, geringer als jene ist, die für ein unmoduliertes Heizen oder Kühlen des Raumes auf die eingegebene Wunschtemperatur erforderlich wäre.

3. Vorrichtung nach Anspruch 2, wobei das Steuermittel auf eine Änderung in der eingegebenen Wunschtemperatur anspricht, um den Raum zunächst auf die Wunschtemperatur und danach, wenn sich die Raumtemperatur eine im voraus festgelegte Zeit in einem im voraus festgelegten Bereich befindet, der die Wunschtemperatur enthält, auf den Zielwert zu heizen oder zu kühlen.

4. Klimagerät nach Anspruch 1, 2 oder 3, wobei die Modulation ein 1/f-Leistungsspektrum hat.

5. Klimagerät nach einem der vorangehenden Ansprüche, umfassend einen Kältemittelkreislauf (10, 12).

6. Klimagerät nach Anspruch 5, umfassend einen Innenwärmetauscher (16) und einen Ventilator (17), um Luft über den Innenwärmetauscher unter der Steuerung des Steuermittels zu blasen, wobei das Steuermittel betätigbar ist, um die Luftströmungsrate zu modulieren, die von dem Ventilator erzeugt wird.

7. Klimagerät nach Anspruch 6, wobei die Modulation der Luftströmungsrate ein 1/f-Leistungsspektrum hat.

8. Klimagerät nach Anspruch 6 oder 7, wobei die Zieltemperatur moduliert wird, so daß ein Durchschnittswert der neuen Zieltemperatur in eine Richtung verschoben wird, in welcher die Klimatisierungslast des Klimagerätes in bezug auf die Last verringert ist, die zum Erreichen eines unmodulierten Zielwertes notwendig ist.

9. Klimagerät nach Anspruch 8, wobei die neue Zieltemperatur in Übereinstimmung mit einer 1/f-Schwankung eingestellt ist.

## Revendications

1. Un conditionneur d'air comprenant des moyens de chauffage variables et/ou des moyens de refroidissement variables (10, 12), en vue du chauffage du chauffage ou de refroidissement d'une pièce, un palpeur de température (80A) destiné à détecter la température de l'air de la pièce, des moyens de contrôle (72C), sensibles à la sortie du palpeur de température, pour modifier l'énergie de chauffage ou l'énergie de refroidissement de manière à contrôler la température de la pièce en vue d'approcher d'une valeur cible, caractérisé en ce que la valeur cible est modulée après une période de temps prédéterminée de manière telle que la température de la pièce approche une nouvelle valeur cible à l'expiration de chaque période de temps prédéterminée successive.

2. Un appareil selon la revendication 1, comprenant des moyens pour la fixation d'une température désirée, dans lequel les moyens de contrôle fixent la valeur cible sur la base d'une température d'entrée désirée, telle que l'énergie moyenne requise pour le chauffage ou le refroidissement modulé de la pièce soit inférieur à celle qui serait requise pour un chauffage ou un refroidissement non modulé de la pièce jusqu'à la température d'entrée désirée.

3. Un appareil selon la revendication 2, dans lequel les moyens de contrôle sont sensibles à une modification de la température d'entrée désirée, de manière à chauffer ou refroidir la pièce initialement vers la température désirée, puis vers la valeur cible, quand la température de la pièce a été amenée dans un intervalle prédéterminé incluant ladite température désirée pendant une période de temps prédéterminée.

4. Un appareil selon la revendication 1, 2 ou 3, dans lequel ladite modulation présente un spectre d'énergie du type 1/f.

5. Un conditionneur d'air selon l'une quelconque des revendications précédentes, comprenant un circuit de réfrigération (10, 12).

6. Un conditionneur d'air selon la revendication 5, comprenant un échangeur de chaleur intérieur (16) et un ventilateur (17) destiné à souffler de l'air au delà de l'échangeur de chaleur intérieur sous le contrôle des moyens de contrôle, dans lequel les moyens de contrôle peuvent fonctionner de manière à moduler le débit du courant d'air produit par le ventilateur.

7. Un conditionneur d'air selon la revendication 6, dans lequel la modulation du débit du courant d'air présente un spectre d'énergie du type 1/f.

8. Un conditionneur d'air selon la revendication 6 ou 7, dans lequel la température cible est modulée de manière à déplacer une valeur moyenne de la nouvelle température cible dans une direction dans laquelle la charge de conditionnement de l'air dans le conditionneur d'air est réduite par rapport à la charge nécessaire pour atteindre une valeur cible non modulée.

**9.** Un condtionneur d'air selon la revendication 8, dans lequel la nouvelle température cible est fixée conformément à une fluctuation du type 1/f.

# FIG.1

COMPRESSOR

ACCUMULATOR

26

24

IN COOLING
IN HEATING
IN DEFROSTING

MUFFLER 38

20

18

4-WAY
VALVE

22

36

MUFFLER

70E

EC

EC

HEAT
EXCHANGER

EM
VALVE

S

HEAT
EXCHANGER

40

112A

29

17

16

28

P

P

CPLRY
TUBE

MODULATOR 42

32

30

STRAINER

34

10

12

# FIG.2

[ INDOOR UNIT]

FIG.3

[OUTDOOR UNIT]

CONTROL BOARD

EP 0 697 570 B1

# FIG.4

START

1

200 — RCPT OF SET INF
(RECEIPT OF SETTING INF)

202 — "AUTO OPN" MODE ?
("AUTO OPERATION" MODE?)

NO

YES

224 — OPN IN OPNL MODE
(OPERATION IN BASED ON SET INF OPERATIONAL MODE...)

204 — $Tt < Ta$ ?

NO

YES

206 — COOLING CONTROL

208 — HEATING CONTROL

226 — SET INF CHANGED ?

NO

YES

1

1

# FIG.5

HEATING CONTROL

2

300 — SET FREQ THRU FUZZY CALCN BASED ON $|Ta-Tt|, \Delta|Ta-Tt|$

301 — HTG OPN AT SET FEQ (HEATING OPERATION)

302 FEELING-OF-WARMTH WAVE ON ?

YES →

318 FREQ OVER PRESET VAL ?

YES →

NO ↓

320 SET INF CHANGED ?

YES → RETURN

NO ↓

322 MEAS TIME ON TMR

324 1 MIN PASSED ?

NO → 2

YES ↓

326 — M=M+1

328 — Ta=To+Tb(M)

330 — RESET TMR

2

NO ↓

304 $Tt \geqq Ta-1$

NO → 306 TURN OFF TMR → 2

YES ↓

TURN ON TMR, MEAS TIME 308

310 10 MIN PASSED ?

NO → 2

YES ↓

To=Ta-1 — 312

TURN ON FEELING-OF-WARMTH WAVE — 314

RESET TMR — 316

2

# FIG.6

```
              ( COOLING CONTROL )
                        │        ◄────────── (3)
                        ▼
        ┌───────────────────────────┐
  350   │  SET FEQ THRU FUZZY        │
        │  CALCN BASED ON            │
        │  |Ta-Tt|,△|Ta-Tt|          │
        └───────────────────────────┘
                        │
        ┌───────────────────────────┐
  351   │   CLG OPN AT SET FREQ      │
        └───────────────────────────┘
                        │
                        ▼
              ◇ FEELING              352
    YES   ◇ -OF-COOLNESS ◇
   ◄──────◇ WAVE ON ?    ◇
   │          ◇        ◇
   ▼             │ NO         354
  ◇ FREQ OVER ◇  ◇ Tt≦Ta-1 ◇  NO        356
YES◇ PRESET VAL◇  ◇        ◇ ──────► TURN OFF
◄─◇    ?     ◇     │ YES              TIMER
   │    ◇   ◇      ▼                    │
   │   NO│   TURN ON TMR,              (3)
   ▼      MEANS TIME
  ◇ SET INF ◇        358
YES◇ CHANGED◇      ◇ 10 MIN ◇  NO
◄─◇    ?   ◇       ◇ PASSED ◇ ──► (3)
RETURN │           ◇   ?  ◇  360
       │ NO          │ YES
       ▼             ▼
  MEAS TIME       To=Ta+1  362
372 ON TMR
       │          TURN ON FEELING-
    374│          OF-COOLNESS      364
  NO ◇ 1 MIN ◇     WAVE
 ◄──◇ PASSED◇
(3) ◇   ?  ◇       RESET TMR  366
       │ YES
376  M=M+1          (3)

378  Ta=To+Tb(M)

380  RESET TMR

       (3)
```

# FIG.7

EP 0 697 570 B1

# FIG.8